# EUROPÄISCHE PATENTSCHRIFT

(11) **EP 2 981 737 B1**
(45) Veröffentlichungstag und Bekanntmachung des Hinweises auf die Patenterteilung: **08.02.2017**
(21) Anmeldenummer: 14713451.4
(22) Anmeldetag: 27.03.2014
(51) Int. Cl.: F16G 13/16, H02G 3/04, H02G 11/00

(54) **ENERGIEFÜHRUNGSKETTE**
ENERGY GUIDING CHAIN
CHAÎNE DE TRANSPORT D'ÉNERGIE

(30) Priorität: 05.04.2013 DE 202013101457 U
(43) Veröffentlichungstag der Anmeldung: 10.02.2016
(73) Patentinhaber: Igus GmbH, 51147 Köln (DE)
(72) Erfinder: HERMEY, Andreas, 53773 Hennef (DE); JAEKER, Thilo-Alexamder, 53757 Sankt Augustin (DE); STRACK, Stefan, 53639 Königswinter (DE)
(74) Vertreter: Lippert, Stachow & Partner
(86) Internationale Anmeldenummer: PCT/EP2014/056134
(87) Internationale Veröffentlichungsnummer: WO 2014/161763

(56) Entgegenhaltungen:
- EP-A1- 1 963 710
- DE-U1-202011 004 762
- DE-U1-202011 004 785
- JP-A- 2000 055 140
- US-A1- 2011 308 043

## Beschreibung

Die Erfindung betrifft eine Energieführungskette zur Führung von Kabeln, Schläuchen oder dergleichen von einer ersten Anschlussstelle zu einer zweiten Anschlussstelle, die relativ zur ersten Anschlussstelle ortsveränderlich ist, bestehend aus einer Vielzahl gegeneinander über einen bestimmten Verschwenkwinkel verschwenkbarer Kettenglieder aus Kunststoff, die jeweils zwei Seitenlaschen umfassen, die zum Ketteninneren weisende Innenseiten, nach außen weisende Außenseiten und dazu senkrecht und in Längsrichtung der Seitenlaschen verlaufende Schmalseiten aufweisen, wobei die Seitenlaschen quer zu ihrer Längsrichtung gegenüberliegende Laschenstränge bilden und mindestens einige der gegenüberliegenden Seitenlaschen durch Querstege miteinander verbunden sind, von denen wenigstens einige an mindestens einem ihrer Enden einen Lagerbereich aufweisen, der mit einer an der zu dem genannten Ende des Querstegs weisenden Seitenlasche angeordneten Lageraufnahme gelenkig zum Verschwenken des Querstegs zwischen einer geschlossenen und einer geöffneten Position zusammenwirkt, und der Quersteg an dem genannten Ende, in Längsrichtung der Seitenlasche gesehen, außerhalb des Lagerbereichs einen Anlagebereich aufweist, der mit einer Anlagefläche an der Innenseite der Seitenlasche in der geschlossenen Position anliegt.

Eine derartige Energieführungskette ist aus der DE 20 2011 004 762 U bekannt. Bei dieser Kette ist der Quersteg plattenförmig ausgebildet mit einer vom Ketteninneren nach außen weisenden flachen Außenseite. An seinen beiden Enden weist der Quersteg im mittleren Bereich angeordnete Lagerbereiche auf, die als Lagerzapfen ausgebildet sind. Seitlich des mittleren Bereichs mit den Lagerzapfen ist jeweils ein sich zur Innenseite der Seitenlasche erstreckender Vorsprung angeordnet, der mit einer Anlagefläche an der Innenseite der Seitenlasche bei geschlossener Position des Querstegs anliegt. Die Vorsprünge bilden den Anlagebereich des Querstegs.

Dieser Anlagebereich erstreckt sich in Form einer zum Ketteninneren hin gerichteten Stufe entlang der Innenseite der Seitenlasche. Die durch die Stufe gebildete Vertiefung des Anlagebereichs hat den Zweck, beim Verschwenken des Querstegs um die durch die Lagerzapfen und Lageraufnahme definierte Lagerachse in die geöffnete Position Bereiche an der Innenseite der Seitenlasche aufzunehmen, um ein vollständiges Öffnen des Querstegs um einen Winkel von 90° oder größer zu ermöglichen.

Als nachteilig bei der stufenförmigen Anlagefläche der Querstege der oben genannten bekannten Energieführungskette wird angesehen, dass insbesondere bei breiten, als Deckel- bzw. Bodenwände ausgebildeten Querstegen einer geschlossenen Energieführungskette sich Staubpartikel, Späne oder andere unerwünschte Schmutzpartikel in der Vertiefung ansammeln und in das Ketteninnere gelangen können. Im Bereich der stufenförmigen Anlageflächen ist eine Abdichtung zwischen den Deckel- und Bodenwänden benachbarter Kettenglieder nur schwer möglich oder ungenügend.

Die stufenförmigen Anlageflächen stellen optisch eine Unterbrechung der sonst durchgehend flach gestalteten Außenseite der Querstege dar und stören ihr durchgehend einheitliches Bild.

Daher liegt der Erfindung die Aufgabe zugrunde, bei einer Energieführungskette der eingangs genannten Art, insbesondere bei geschlossener Ausführung mit sich überlappenden Deckelwänden und Bodenwänden benachbarter Kettenglieder, ein Ansammeln von Schmutzpartikeln oder Spänen in den Bereichen, in denen die Querstege an den Innenseiten der Seitenlaschen anliegen, und ein Eindringen der Schmutzpartikel oder Späne in die Überlappungsbereiche der Deckel- und Bodenwände benachbarter Laschen weitgehend zu verhindern und der Energieführungskette ein äußerlich gefälliges Bild zu geben.

Die Aufgabe wird erfindungsgemäß dadurch gelöst, dass bei einer Energieführungskette der eingangs genannten Art die vom Ketteninneren nach außen weisende Seite des Anlagebereichs des Querstegs bis zu seiner Anlagefläche hin konvex gekrümmt ist oder in eine lineare Neigung übergeht und mit der Innenseite der Seitenlasche einen Winkel einschließt, der kleiner als 90° ist, so dass die Anlagefläche beim Aufschwenken des Querstegs bis zum Erreichen der vollständig geöffneten Position sich entlang der Innenseite der Seitenlasche zum Ketteninneren hin bewegt.

Aufgrund der konvexen Krümmung des Querstegs oder des Übergangs in eine lineare Neigung in dessen Anlagebereich können Schmutzpartikel oder Späne, die sich zwischen dem oberen Rand der Innenseite der Seitenlasche und der nach außen weisenden Seite des Anlagebereichs ansammeln, über die gekrümmte bzw. linear geneigte Fläche abgleiten. Bei einer geschlossenen Energieführungskette mit sich jeweils überlappenden Deckel- und Bodenwänden benachbarter Kettenglieder ermöglichen die gekrümmten bzw. linear geneigten Flächen eine präzisere Anlage und damit bessere Abdichtung der sich überlappenden Wandabschnitte. Dadurch wird das Eindringen von Staubpartikeln oder Spänen in diesen Bereichen weitestgehend verhindert. Schließlich ist das Erscheinungsbild der Querstege bzw. Deckel- und Bodenwände aufgrund der Krümmung oder linearen Neigung in den Endbereichen der sonst flachen Querstege bzw. Deckel- und Bodenwände gefälliger.

Der Quersteg lässt sich bis in seine vollständig geöffnete Position ungehindert durch Bereiche an der Innenseite der Seitenlasche aufschwenken. Vorzugsweise wird dabei keine Kraft vom Anlagebereich über die Anlagefläche des Querstegs auf die Innenseite der Seitenlasche ausgeübt.

Als zweckmäßig hat sich ein Winkel zwischen der Außenseite des Anlagebereichs an der Stelle der Anlagefläche und der Innenseite der Seitenlasche erwiesen, der kleiner oder gleich 80° ist. Vorzugsweise ist der Winkel kleiner oder gleich 70°. Andererseits ist der Winkel bevorzugt größer als 40°.

Die Erfindung ist besonders geeignet für eine Energieführungskette, bei der die Lageraufnahme an der Innenseite der Seitenlasche vorsteht. Bei dieser Ausbildung erstreckt sich der Anlagebereich des Querstegs seitlich der Lageraufnahme bis zur Innenseite der Seitenlasche.

Die Lageraufnahme an der Innenseite der Seitenlasche kann gegenüber der ihr benachbarten Schmalseite der Seitenlasche zum Ketteninneren hin versetzt angeordnet sein.

Weiterhin kann der sich in Längsrichtung des Querstegs zum Lagerbereich erstreckende Bereich der Außenseite des Querstegs, einschließlich des Lagerbereichs, in geschlossener Position des Querstegs gegenüber der benachbarten Schmalseite der Seitenlasche zum Ketteninneren hin versetzt angeordnet sein.

In einer bevorzugten Ausbildung ist der außerhalb des Anlagebereichs liegende, sich in Längsrichtung des Querstegs zu dessen Lagerbereich erstreckende Bereich der Außenseite des Querstegs im Wesentlichen flach ausgebildet.

In einer weiteren bevorzugten Ausbildung ist der außerhalb des Anlagebereichs liegende, sich in Längsrichtung des Querstegs zu dessen Lagerbereich erstreckende Bereich des Querstegs in Form einer im Wesentlichen flachen Platte ausgebildet.

Bei einer besonders zweckmäßigen Ausbildung der Erfindung umfasst der Anlagebereich zwei an beiden Seiten des Lagerbereichs angeordnete Anlagebereiche mit jeweils einer Anlagefläche.

Der Quersteg kann an dem genannten Befestigungsende einen Ansatz aufweisen, an dem zwei auf einer Achse liegende Lagerzapfen angeordnet sind, die jeweils in eine an der Innenseite der Seitenlasche angeordnete taschenförmige Zapfenaufnahme einsetzbar sind. Die Anlagefläche des Anlagebereichs des Querstegs kann in Höhe der Achse der Lagerzapfen oder gegenüber der Achse zum Ketteninneren hin versetzt angeordnet sein.

In einer bevorzugten Ausführung der Erfindung weist jedes Kettenglied untere und obere Querstege auf, die als Bodenwände bzw. Deckelwände ausgebildet sind, wobei sich die Boden- und Deckelwände benachbarter Kettenglieder teleskopartig über den gesamten Verschwenkwinkel hinweg überlappen. Bei dieser Ausbildung können sich die seitlich an die Seitenlaschen angrenzenden Anlagebereiche der Bodenwände und/oder Deckelwände ebenfalls teleskopartig überlappen, so dass auch diese Bereiche weitestgehend gegenüber dem Eindringen von Staub, Schmutzpartikeln oder Spänen über den gesamten Verschwenkwinkel benachbarter Kettenglieder hinweg abgedichtet sind.

Insbesondere bei der Ausbildung der Querstege als Boden- bzw. Deckelwände einer geschlossenen Kette ist es vorteilhaft, dass sich der Anlagebereich mit der Anlagefläche über die gesamte Breite des Querstegs außerhalb des Lagerbereichs erstreckt.

In einer bevorzugten Weiterbildung der Erfindung weisen die sich teleskopartig überlappenden Flächen der Deckel- bzw. Bodenwänden benachbarter Kettenglieder, einschließlich der Anlagenbereiche, in Schnitten senkrecht zu den Verschwenkachsen der benachbarten Kettenglieder zu diesen im Wesentlichen konzentrische Krümmungen auf, die sich über den gesamten Verschwenkwinkel erstrecken.

Die konvexen Außenseiten der Überlappungsbereiche und die sich über diese erstreckenden konkaven Innenseiten der Anlagebereiche eines benachbarten Kettenglieds sind bevorzugt so ausgelegt, dass beim Aufschwenken der Boden- bzw. Deckelwand des benachbarten Kettenglieds die Anlagefläche sich entlang der Außenseite des darunter befindlichen Anlagebereichs einer nicht aufgeschwenkten Boden- bzw. Deckelwand bewegt. Bevorzugt bewegt sich die Anlagefläche der außenliegenden Boden- bzw. Deckelwand des benachbarten Glieds über dem Anlagebereich der nicht aufgeschwenkten innenliegenden Boden- bzw. Deckelwand ohne Ausübung einer Kraft auf diese Boden- bzw. Deckelwand.

In einer vorteilhaften Weiterbildung sind die Bereiche der Deckelwand und Bodenwand, einschließlich der Anlagebereiche, die teleskopartig die Deckelwand bzw. Bodenwand eines benachbarten Kettenglieds nach außen überlappen, als Abstreifer ausgebildet, die auf der Deckelwand bzw. Bodenwand des benachbarten Kettenglieds mit einer Vorspannung anliegen können.

Bei einer Energieführungskette mit zumindest einer der vorstehend beschriebenen Ausführungen, wobei der Lagerbereich des Querstegs Lagerzapfen aufweist, sind die Lagerzapfen in einer bevorzugten Ausbildung zylindrisch ausgebildet mit einem ersten abgeflachten Abschnitt auf der Zylindermantelfläche, der parallel zur Zylinderachse verläuft.

Die dem Lagerzapfen zugeordnete Zapfenaufnahme der benachbarten Seitenlasche kann ebenfalls einen zum Lagerzapfen korrespondierenden zylindrischen Raum aufweisen, der gegenüber einer Einführöffnung für den Lagerzapfen erweitert ist, so dass der Lagerzapfen in der Zapfenaufnahme einrastbar ist.

Weiterhin kann die Wand des zylindrischen Raumes einen abgeflachten Abschnitt aufweisen, wobei dieser und der erste abgeflachte Abschnitt des Lagerzapfens so zueinander angeordnet sind, dass in der geschlossenen Position des Querstegs in Bezug auf die Seitenlasche der abgeflachte Abschnitt der Zapfenaufnahme und der erste abgeflachte Abschnitt des Lagerzapfens sich gegenüber liegen, insbesondere aneinander anliegen.

In einer bevorzugten Weiterbildung kann der Lagerzapfen einen zweiten abgeflachten Abschnitt aufweisen, der parallel zur Zylinderachse des Lagerzapfens verläuft, wobei der zweite abgeflachte Abschnitt am Lagerzapfen so angeordnet ist, dass er in der vollständig geöffneten Position des Querstegs in Bezug auf die Seitenlasche dem abgeflachten Abschnitt der Zapfenaufnahme gegenüberliegt, insbesondere an diesem anliegt.

Im Querschnitt bilden die abgeflachten Abschnitte des Lagerzapfens Sekanten des Umfangkreises der zylinderförmigen Lagerzapfen und der abgeflachte Abschnitt der Zapfenaufnahme eine Senkante des Umfangskreises des zylindrischen Raums der Zapfenaufnahme.

Aufgrund dieser Ausbildung des Lagerzapfens und der Zapfenaufnahme befindet sich der Lagerzapfen in geschlossener Position des Querstegs und vollständig geöffneter Position des Querstegs jeweils in einer Raststellung in der Zapfenaufnahme.

Dies hat den Vorteil, dass der Quersteg gegenüber der benachbarten Seitenlasche, an der er verschwenkbar angeordnet ist, sowohl in seiner geschlossenen Position als auch in seiner vollständig geöffneten Position winkelstabil in Bezug auf die benachbarte Seitenlasche anordenbar ist. Die Winkelstabilität gewährleistet in der geschlossenen Position des Querstegs eine Seitenstabilität der mit dem Quersteg verbundenen Seitenlaschen insbesondere dann, wenn der gegenüberliegende Quersteg zum Beispiel zum Einlegen oder Austausch von Leitungen geöffnet ist. Die Winkelstabilität der Seitenlaschen gegenüber den sie verbindenden Querstegen ist insbesondere dann gewährleistet, wenn über eine Mehrzahl von Kettengliedern hinweg die gegenüberliegenden Querstege geöffnet sind.

Insbesondere ist es vorteilhaft, wenn der erste abgeflachte und der zweite abgeflachte Abschnitt in einem Winkel größer als 90° zueinander angeordnet sind, der beim Verschwenken des Querstegs zwischen seiner geschlossenen und vollständig geöffneten Position überstrichen wird. Die vollständig geöffnete Position des Querstegs ist dann leicht nach außen geneigt, so dass Leitungen bequemer in die Energieführungskette eingelegt oder ausgetauscht werden können.

Ausführungsbeispiele der vorliegenden Erfindung werden im Folgenden anhand der Zeichnung näher beschrieben.

In der Zeichnung zeigen:
Fig. 1 eine perspektivische Ansicht eines drei aneinandergefügte Kettenglieder umfassenden Abschnittes einer Energieführungskette von oben,
Fig. 2 eine perspektivische Ansicht des in Figur 1 gezeigten Kettenabschnitts von unten,
Fig. 3 eine stirnseitige Ansicht des in Figur 1 dargestellten Abschnittes in Richtung des Pfeils III,
Fig. 4 eine Seitenansicht des in Figur 1 dargestellten Abschnittes in Richtung des Pfeils IV,
Fig. 5 eine Draufsicht auf den in Figur 1 dargestellten Abschnitt von oben,
Fig. 6 eine perspektivische Ansicht eines oberen Querstegs des in Figur 1 dargestellten Abschnitts von oben,
Fig. 7 eine vergrößerte Ansicht des in Figur 6 mit A umrandeten Bereichs,
Fig. 8 eine stirnseitige Ansicht des in Figur 6 dargestellten Querstegs in Richtung des Pfeils VIII,
Fig. 9 eine seitliche Ansicht des in Figur 6 dargestellten Querstegs in Richtung des Pfeils IX,
Fig. 10 eine Draufsicht auf den in Figur 6 dargestellten Quersteg,
Fig. 11 einen Schnitt längs der Linie XI in Figur 4,
Fig. 12 einen Schnitt längs der Linie XII in Figur 4, jedoch bei geschlossener Position des unteren Querstegs.

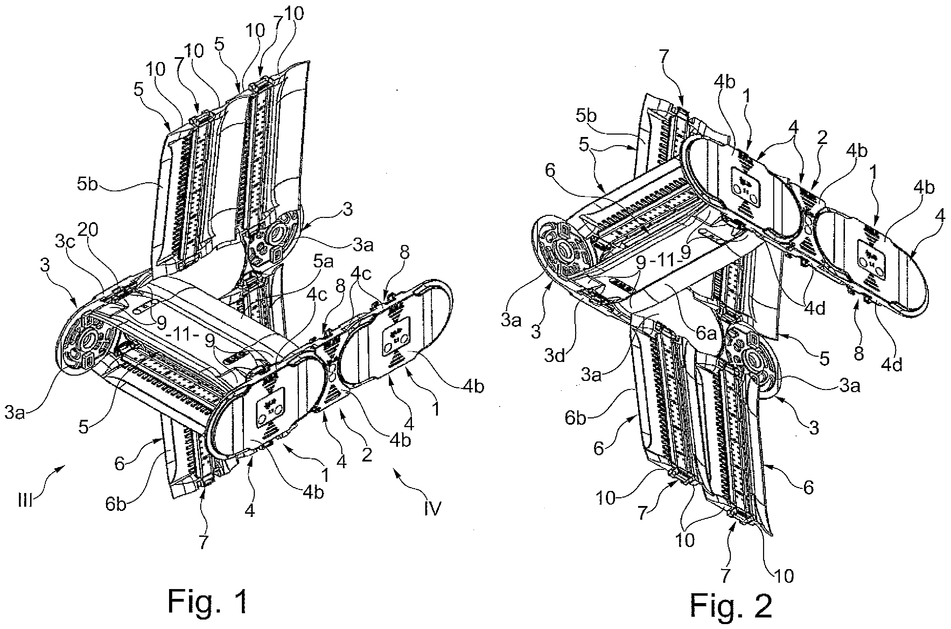

Der in Figur 1 gezeigte Abschnitt einer Energieführungskette besteht aus drei Kettengliedern, wobei die äußeren Kettenglieder 1 gegenüberliegende Seitenlaschen 3 aufweisen, die die Seitenlaschen 4 des inneren Kettenglieds 2 von außen überlappen. Die Seitenlaschen 3 und 4 bilden quer zu ihrer Längsrichtung gegenüberliegende Laschenstränge, die sich über die gesamte Länge der Energieführungskette fortsetzen.

Die Energieführungskette setzt sich aus einer Vielzahl gegeneinander über einen bestimmten Verschwenkwinkel verschwenkbarer Kettenglieder 1, 2 zusammen und erstreckt sich von einer (in der Zeichnung nicht dargestellten) ersten Anschlussstelle zu einer (in der Zeichnung nicht dargestellten) zweiten Anschlussstelle, die relativ zur ersten Anschlussstelle ortsveränderlich ist.

Wie aus den Figuren 1 und 2 hervorgeht, weist jede Seitenlasche 3, 4 eine zum Ketteninneren hin weisende Innenseite 3a, 4a, eine nach außen weisende Außenseite 3b, 4b und dazu senkrecht und in Längsrichtung der Seitenlaschen verlaufende Schmalseiten 3c, 3d, 4c, 4d auf.

Die gegenüberliegenden Seitenlaschen 3, 4 sind durch obere Querstege 5 und untere Querstege 6 miteinander verbindbar. Die oberen Querstege sind als Deckelwände und die unteren Querstege als Bodenwände ausgebildet. In den Zeichnungsfiguren 1 - 5 sind die Querstege 5 und 6 des vorderen Kettenglieds 1 in geschlossener Position dargestellt, während die Querstege 5 und 6 der beiden dahinter liegenden Kettenglieder 2 und 1 in ihrer geöffneten Position dargestellt sind.

Die Querstege 5, 6 weisen an ihren Enden jeweils einen Lagerbereich 7 auf, der mit einer an der zu dem genannten Ende des Querstegs weisenden Seitenlasche 3 bzw. 4 angeordneten Lageraufnahme 8 gelenkig zum Verschwenken des Querstegs zwischen seiner geschlossenen und geöffneten Position zusammenwirkt.

Jeder Quersteg 5, 6 weist an dem genannten Ende, in Längsrichtung der Seitenlasche 3, 4 gesehen, außerhalb des Lagerbereichs 7 einen Anlagebereich 9 auf, der mit einer Anlagefläche 10 an der Innenseite 3a, 4a der Seitenlasche 3 bzw. 4 in der geschlossenen Position des Querstegs 5, 6 anliegt.

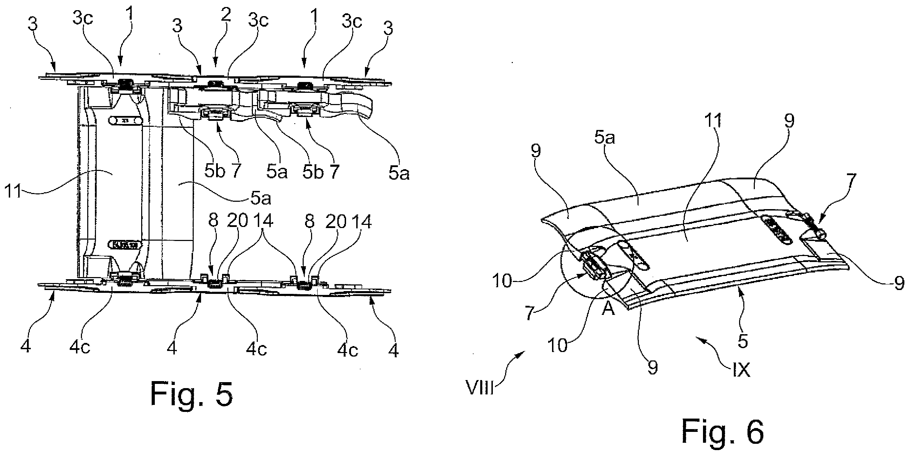

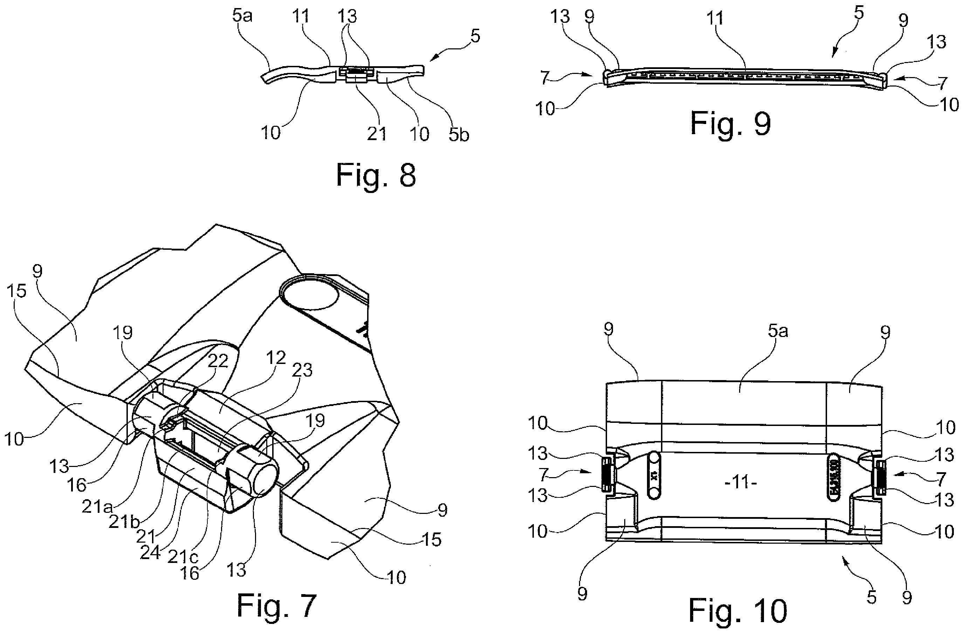

Wie insbesondere aus den Figuren 6 bis 10 hervorgeht, ist die vom Ketteninneren nach außen weisende Seite 11 des Anlagebereichs 9 des Querstegs 5, 6 bis zu seiner Anlagefläche 10 hin konvex gekrümmt. Mit der Innenseite 3a, 4a der benachbarten Seitenlasche 3 bzw. 4 schließt der Anlagebereich 9 an der Stelle der Anlagefläche 10 einen Winkel ein, der etwa 75° beträgt, wie insbesondere Figur 9 zu entnehmen ist. Aufgrund der konvexen Krümmung des Querstegs 5, 6 im Anlagebereich 9 lässt sich der Quersteg aus seiner geschlossenen Position bis in seine vollständig geöffnete Position ungehindert durch Bereiche an der Innenseite 3a, 4a der Seitenlasche 3 bzw. 4 aufschwenken, wie unten noch näher ausgeführt wird. Dabei übt der Anlagebereich 9 über die Anlagefläche 10 keine Kraft auf die Innenseite 3a, 4a der Seitenlasche 3 bzw. 4 aus.

Wie insbesondere aus Figur 5 hervorgeht, steht die jeweilige Lageraufnahme 8 für den Lagerbereich 7 am jeweiligen Ende des Querstegs 5, 6 an der Innenseite 3a, 4a der Seitenlasche 3 bzw. 4 zum Ketteninneren hin vor. Der Anlagebereich 9 des Querstegs 5, 6 erstreckt sich bei dieser Ausbildung seitlich der Lageraufnahme 8 bis zur Innenseite 3a, 4a der Seitenlasche 3, bzw. 4.

Weiterhin ist die Lageraufnahme, wie insbesondere aus den Figuren 1 bis 3 hervorgeht, an der Innenseite 3a, 4a der Seitenlasche 3 bzw. 4 gegenüber der ihr benachbarten Schmalseite 3c, 3d bzw. 4c bzw. 4d der Seitenlasche 3 bzw. 4 zum Ketteninneren hin versetzt angeordnet.

Wie ebenfalls den Figuren 1 bis 3 zu entnehmen ist, ist der sich in Längsrichtung des Querstegs 5, 6 zum Lagerbereich 7 erstreckende Bereich der Außenseite des Querstegs 5, 6 in geschlossener Position des Querstegs 5, 6 geringfügig gegenüber der jeweils benachbarten Schmalseite 3c, 3d, 4c, 4d der Seitenlasche 3 bzw. 4 zum Ketteninneren hin versetzt angeordnet. Aufgrund der konvexen Krümmung des Querstegs 5, 6 im Anlagebereich 9 vergrößert sich der Versatz zur Anlagefläche 10 hin. Wie aus den Zeichnungsfiguren weiterhin hervorgeht, ist der außerhalb des Anlagebereichs 9 liegende, sich in Längsrichtung des Querstegs 5, 6 zu dessen Lagerbereich 7 hin erstreckende Bereich der nach außen weisenden Seite 11 des Querstegs 5, 6 im Wesentlichen flach ausgebildet. Der Quersteg 5, 6 ist in diesem Bereich in Form einer im Wesentlichen flachen Platte geformt.

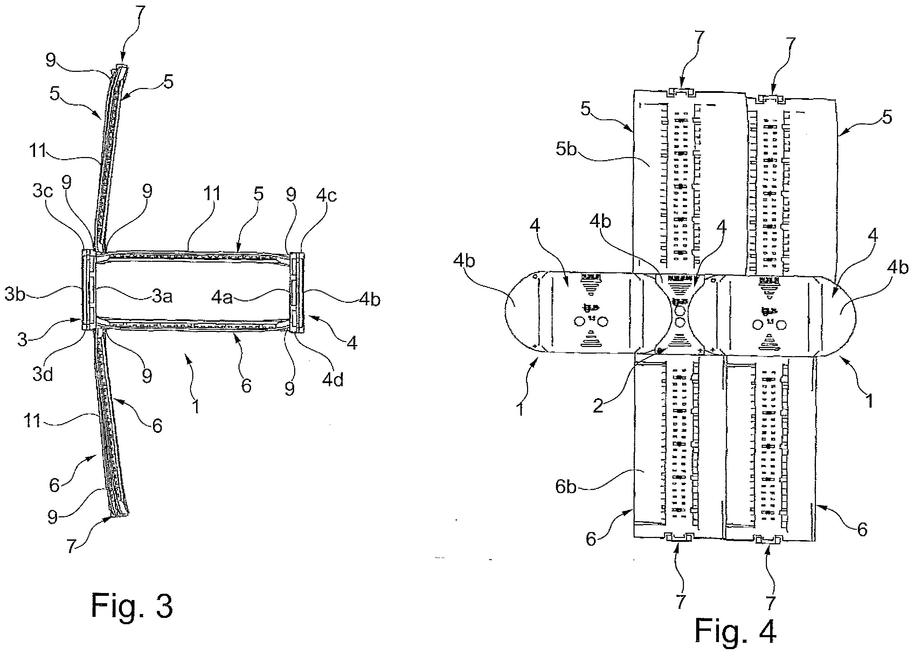

Wie insbesondere den Figuren 4 und 6 - 8 zu entnehmen ist, umfasst der Anlagebereich 9 des Querstegs 5, 6 zwei an beiden Seiten des Lagerbereichs 7 angeordnete Anlagebereiche mit jeweils einer Anlagefläche.

Wie insbesondere Figur 4 zu entnehmen ist, ist der obere Quersteg 5 breiter ausgebildet als der untere Quersteg 6. Dies entspricht der Abwinkelungsrichtung der benachbarten Kettenglieder 1, 2 entgegen dem Uhrzeigersinn bei ortsfest angenommenen hinteren Kettenglied 1, wobei die nach unten weisende Seite des in den Figuren 1 - 5 gezeigten Abschnitts der Energieführungskette verkleinert und die nach oben weisende Seite des Abschnitts der Energieführungskette in Abwinkelungsrichtung vergrößert wird und daher die Breite der oberen Querstege 5 größer sein muss als die Breite der unteren Querstege.

Der Anlagebereich 9 mit der Anlagefläche 10 erstreckt sich über die gesamte Breite des Querstegs 5, 6 außerhalb des Lagerbereichs 7.

Wie insbesondere in den Figuren 1, 2, 4 und 5 gezeigt ist, überlappen sich die als Bodenwände bzw. Deckelwände ausgebildeten Querstege 5 bzw. 6 benachbarter Kettenglieder 1, 2 teleskopartig über den gesamten Verschwenkwinkel hinweg. Die seitlich an die Seitenlaschen 3, 4 angrenzenden Anlagebereiche 9 der Querstege 5, 6 überlappen sich dabei ebenfalls teleskopartig, so dass auch diese Bereiche gegenüber dem Eindringen von Staub, Schmutzpartikeln oder Spänen über den gesamten Verschwenkwinkel benachbarter Kettenglieder 1, 2 hinweg abgedichtet sind.

Die sich teleskopartig überlappenden Flächen 5a, 5b, 6a, 6b der Querstege 5, 6 benachbarter Kettenglieder 1, 2, einschließlich der Anlagebereiche 9, weisen in Schnitten senkrecht zu den Verschwenkachsen der benachbarten Kettenglieder 1, 2 zu den Verschwenkachsen im Wesentlichen konzentrische Krümmungen auf, die sich über den gesamten Verschwenkwinkel erstrecken.

Die konvexen Außenseiten (Flächen 5a, 6a) der Überlappungsbereiche und die sich über diese erstreckenden konkaven Innenseiten (Flächen 5b, 6b) der Anlagebereiche 9 eines benachbarten Kettenglieds 1, 2 sind so ausgelegt, dass beim Aufschwenken der Querstege 5, 6 des benachbarten Kettenglieds 1, 2 die Anlagefläche 10 sich entlang der Außenseite (Fläche 5a, bzw. 6a) des darunter befindlichen Anlagebereichs 9 eines nicht aufgeschwenkten Querstegs 5, 6 bewegt, ohne dabei eine Kraft auf den nicht aufgeschwenkten Quersteg 5, 6 auszuüben.

Die Bereiche der Querstege 5, 6, einschließlich der Anlagebereiche 9, die teleskopartig die Querstege 5, 6 eines benachbarten Kettenglieds 1, 2 nach außen überlappen, sind mit der Funktion eines Abstreifers ausgebildet, der auf dem Quersteg 5, 6 des benachbarten Kettenglieds 1, 2 mit einer Vorspannung anliegen kann.

Wie insbesondere aus den Figuren 6 und 7 hervorgeht, weisen die Querstege 5, 6 an ihren Befestigungsenden jeweils einen sich in Längsrichtung des betreffenden Querstegs 5, 6 erstreckenden Ansatz 12 auf, an dem zwei quer zu diesem und auf einer gemeinsamen Achse liegende Lagerzapfen 13 angeordnet sind.

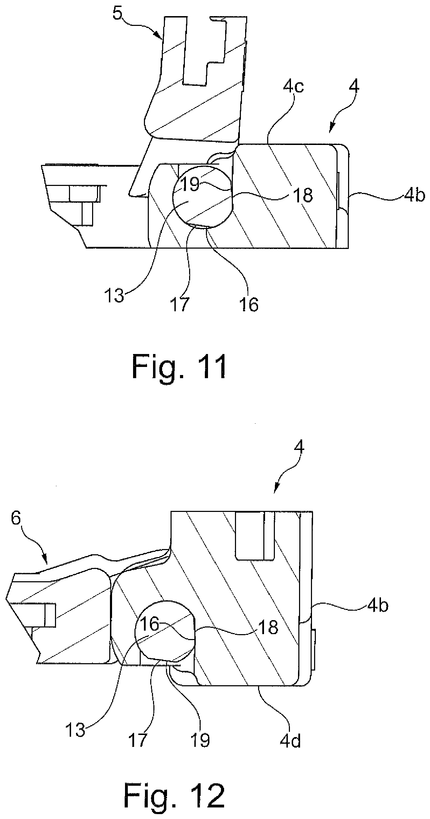

Die Lagerzapfen 13 sind so ausgelegt, dass sie jeweils in eine an der Innenseite 3a, 4a der Seitenlasche 3 bzw. 4 angeordnete taschenförmige Zapfenaufnahme 14 einsetzbar sind, wie in den Figuren 11 und 12 gezeigt ist.

Der vom Ketteninneren parallel zu den Seitenlaschen 3, 4 nach außen weisende Rand 15 der Anlagefläche 10 des Anlagebereichs 9 des Querstegs 5, 6 erstreckt sich unterhalb der Achse der Lagerzapfen 13 bis maximal zu deren Höhe. An einer Seite des Lagerbereichs 7 erstreckt sich der Rand linear in Längsrichtung der Seitenlaschen 3, 4, während auf der anderen Seite des Lagerbereichs 7 sich der obere Rand 15 der Anlagefläche 10 wellenförmig mit einem vom Lagerbereich 7 weg führenden, im Wesentlichen konkaven Bereich und einem daran anschließenden konvexen Bereich im Überlappungsbereich erstreckt.

Wie insbesondere den Figuren 7, 11 und 12 zu entnehmen ist, sind die Lagerzapfen 13 im Wesentlichen zylindrisch ausgebildet mit einem ersten abgeflachten Abschnitt 16 auf ihrer Zylindermantelfläche, die parallel zur Achse der Lagerzapfen 13 verläuft. Die dem Lagerzapfen 13 zugeordnete Zapfenaufnahme 14 weist einen zum Lagerzapfen 13 korrespondierenden zylindrischen Raum 17 auf, der gegenüber einer Einführöffnung für den Lagerzapfen 13 erweitert ist, so dass der Lagerzapfen 13 in der Zapfenaufnahme 14 einrastbar ist. Die Wand des zylindrischen Raums 17 weist einen zum ersten abgeflachten Abschnitt des Lagerzapfens 13 korrespondierenden abgeflachten Abschnitt 18 auf, wobei dieser und der erste abgeflachte Abschnitt 16 des Lagerzapfens 13 so zueinander angeordnet sind, dass in der geschlossenen Position des Querstegs 5, 6 der abgeflachte Abschnitt 18 der Zapfenaufnahme 14 und der erste abgeflachte Abschnitt 16 des Lagerzapfens 13 aneinander anliegen.

Der Lagerzapfen 13 weist, wie in den Figuren 11 und 12 gezeigt ist, einen zweiten abgeflachten Abschnitt 19 auf, der parallel zur Achse des Lagerzapfens 13 verläuft, wobei der zweite abgeflachte Abschnitt 19 am Lagerzapfen 13 so angeordnet ist, dass er in der vollständig geöffneten Position des Querstegs 5, 6 an dem abgeflachten Abschnitt 18 der Zapfenaufnahme 14 anliegt. Im Querschnitt bilden die abgeflachten Abschnitte 16 und 19 des Lagerzapfens 13 Sekanten des Umfangkreises des im Wesentlichen zylinderförmigen Lagerzapfens 13 und der abgeflachte Abschnitt 18 der Zapfenaufnahme 14 eine Sekante des Umfangkreises des im Wesentlichen zylindrischen Raums 17 der Zapfenaufnahme 14.

Aufgrund der vorstehend beschriebenen Ausbildung des Lagerzapfens 13 und der Zapfenaufnahme 14 befindet sich der Lagerzapfen 13 in vollständig geöffneter Position des Querstegs 5, 6 und in geschlossener Position des Querstegs 5, 6 jeweils in einer Raststellung in der Zapfenaufnahme 14 gemäß den Figuren 11 bzw. 12.

Wie ebenfalls aus den Figuren 11 und 12 hervorgeht, sind der erste abgeflachte Abschnitt 16 und der zweite abgeflachte Abschnitt 19 des Lagerzapfen 13 in einem Winkel größer als 90° zueinander angeordnet, der beim Verschwenken des Querstegs 5, 6 zwischen seiner geschlossenen und vollständig geöffneten Position überstrichen wird.

Zur weiteren Befestigung des Querstegs 5, 6 an der benachbarten Seitenlasche 3, 4 weisen diese im Bereich ihrer oberen Schmalseite 3c, 4c und ihrer unteren Schmalseite 3d, 4d zwischen den Zapfenaufnahmen 14 eine Schnappeinrichtung mit einer Schnappnase 20 auf, wie zum Beispiel aus Figur 5 hervorgeht. Die Schnappnase 20 wirkt mit einer am betreffenden Befestigungsende des Querstegs 5, 6 angeordneten Rastleiste 21 zusammen, so dass in der geschlossenen Position des Querstegs 5, 6 die Schnappnase 20 die Rastleiste 21 übergreift.

Entsprechend der Anordnung der Schnappnase 20 zwischen den Zapfenaufnahmen 14 ist die Rastleiste 21 im Bereich zwischen den Lagerzapfen 13 zum Ketteninneren hin versetzt angeordnet. Wie aus Figur 7 hervorgeht, sind die in Längsrichtung der Seitenlaschen 3, 4 liegenden Endbereiche der Rastleiste 21 an den aufeinander zu weisenden Stirnseiten der Lagerzapfen 13 angeformt. Die Rastleiste 21 weist drei im Wesentlichen ebene Flächen 21a, 21b, 21c auf, an denen die Schnappnase 20 in der Raststellung des Querstegs 5, 6 anliegt. Die Flächen 21a und 21c grenzen an die gegenüberliegenden Stirnseiten der Lagerzapfen 13 an. Im mittleren Bereich zwischen diesen Flächen weist die Rastleiste eine tiefergelegene Fläche 21b auf.

Entsprechend liegt in der Raststellung des Querstegs 5, 6 die Schnappnase 20 an den beiden äußeren Flächen 21a und 21c an. In ihren mittleren über der tiefer liegenden Fläche 21b gelegenen Bereich weist die Schnappnase 20 einen tiefer gezogenen Vorsprung auf, der in der Raststellung des Querstegs 5, 6 an der tiefer liegenden Fläche 21b der Rastleiste 21 anliegt. Somit wirkt die Schnappnase 20 über ihre gesamte Erstreckung in Längsrichtung der Seitenlaschen 3, 4 mit der Rastleiste 21 zusammen.

Der tiefer liegende Bereich der Rastleiste 21 ermöglicht es, mit einem geeigneten Werkzeug, zum Beispiel einem Schraubendreher, von der Seite des Querstegs 5, 6 her gegen die Schnappnase 20 zu drücken, um die Rastleiste 21 des Querstegs 5, 6 aus der Raststellung mit der Schnappnase 20 zu lösen.

Die Schnappnase 20 ist an einem elastisch biegsamen Schnapphaken ausgebildet, der am Boden einer zur Schmalseite 3c, 3d, 4c, 4d der Seitenlasche 3, 4 und zum Ketteninneren hin offenen Ausnehmung angeordnet ist.

Wie weiterhin aus Figur 7 hervorgeht, schließt sich an die zum Ansatz 12 des Querstegs 5, 6 gerichteten Seite der äußeren Flächen 21a, 21c der Rastleiste 21 ein gegenüber diesen Flächen vorstehender, um die Achse der Lagerzapfen 13 verlaufender Bereich 22 an, der mit dem Ansatz 12 des Querstegs 5, 6 verbunden ist. Der Bereich 22 bildet eine Verstärkung des Übergangs zwischen der Rastleiste 21 und dem Ansatz 12. Beim Verschwenken des Querstegs 5, 6 um die Achse der Lagerzapfen 13 wird durch die Außenkontur der Bereiche 22 ein Kontakt mit der Schnappnase 20 des Schnapphakens vermieden.

Zwischen den Bereichen 23 ist, wie Figur 7 zeigt, ein Durchbruch 23 vorgesehen.

Die zur benachbarten Seitenlasche 3, 4 hin weisende Seite der Rastleiste 21 weist, wie ebenfalls Figur 7 zu entnehmen ist, eine zum Ketteninneren hin verlaufende Gleitschräge 24 auf, die mit der Schnappnase 20 am Schnapphaken derart zusammenwirkt, dass dieser beim Einsetzen der Lagerzapfen 13 des Querstegs 5, 6 in die Zapfenaufnahmen 14 bei im Wesentlichen senkrechter Stellung des Querstegs 5, 6 zur Seitenlasche 3, 4) in der Ausnehmung nach außen hin gedrückt wird. Die Gleitschräge 24 liegt in der Raststellung geschlossener Position des Querstegs 5, 6 an der zum Ketteninneren hin weisenden Seite des Schnapphakens unterhalb der Schnappnase 20 und der tiefergezogenen Vorsprungs an.

### Bezugzeichenliste

- 1: Kettenglied
- 2: Kettenglied
- 3: Seitenlasche
- 3a: Innenseite
- 3b: Außenseite
- 3c: Schmalseite
- 3d: Schmalseite
- 4: Seitenlasche
- 4a: Innenseite
- 4b: Außenseite
- 4c: Schmalseite
- 4d: Schmalseite
- 5: oberer Quersteg
- 5a: teleskopartig überlappende Fläche
- 5b: teleskopartig überlappende Fläche
- 6: unterer Quersteg
- 6a: teleskopartig überlappende Fläche
- 6b: teleskopartig überlappende Fläche
- 7: Lagerbereich
- 8: Lageraufnahme
- 9: Anlagebereich
- 10: Anlagefläche
- 11: nach außen weisende Seite
- 12: Ansatz
- 13: Lagerzapfen
- 14: Zapfenaufnahme
- 15: Rand der Anlagefläche
- 16: erster abgeflachter Abschnitt
- 17: zylindrischer Raum
- 18: abgeflachter Abschnitt
- 19: zweiter abgeflachter Abschnitt
- 20: Schnappnase
- 21: Rastleiste
- 21a: Fläche
- 21b: Fläche
- 21c: Fläche
- 22: Bereich
- 23: Durchbruch
- 24: Gleitschräge

## Patentansprüche

1. Energieführungskette zur Führung von Kabeln, Schläuchen und dergleichen von einer ersten Anschlussstelle zu einer zweiten Anschlussstelle, die relativ zur ersten Anschlussstelle ortsveränderlich ist, bestehend aus einer Vielzahl gegeneinander über einen bestimmten Verschwenkwinkel verschwenkbarer Kettenglieder (1, 2) aus Kunststoff, die jeweils zwei Seitenlaschen (3, 4) umfassen, die zum Ketteninneren hin weisende Innenseiten (3a, 4a), nach außen weisende Außenseiten (3b, 4b) und dazu senkrecht und in Längsrichtung der Seitenlaschen (3, 4) verlaufende Schmalseiten (3c, 3d, 4c, 4d) aufweisen, wobei die Seitenlaschen (3, 4) quer zu ihrer Längsrichtung gegenüberliegende Laschenstränge bilden und mindestens einige der gegenüberliegenden Seitenlaschen (3, 4) durch Querstege (5, 6) miteinander verbunden sind, von denen wenigstens einige an mindestens einem ihrer Enden einen Lagerbereich (7) aufweisen, der mit einer an der zu dem genannten Ende des Querstegs (5, 6) weisenden Seitenlasche (3, 4) angeordneten Lageraufnahme (8) gelenkig zum Verschwenken des Querstegs (5, 6) zwischen einer geschlossenen und einer geöffneten Position zusammenwirkt, und der Quersteg (5, 6) an dem genannten Ende, in Längsrichtung der Seitenlasche (3, 4) gesehen außerhalb des Lagerbereichs (7) einen Anlagebereich (9) aufweist, der mit einer Anlagefläche (10) an der Innenseite (3a, 4a) der Seitenlasche (3, 4) in der geschlossenen Position anliegt, **dadurch gekennzeichnet, dass** die vom Ketteninneren nach außen weisende Seite (11) des Anlagebereichs (9) des Querstegs (5, 6) bis zu seiner Anlagefläche (10) hin konvex gekrümmt ist oder in eine lineare Neigung übergeht und mit der Innenseite (3a, 4a) der Seitenlasche (3, 4) einen Winkel einschließt, der kleiner als 90° ist, so dass die Anlagefläche (10) beim Aufschwenken des Querstegs (5, 6) bis zum Erreichen der vollständig geöffneten Position sich entlang der Innenseite (3a, 4a) der Seitenlasche (3, 4) zum Ketteninneren hin bewegt.

2. Energieführungskette nach Anspruch 1, **dadurch gekennzeichnet, dass** der Winkel zwischen der Außenseite des Anlagebereichs (9) an der Stelle der Anlagefläche (10) und der Innenseite (3a, 4a) der Seitenlasche (3, 4) kleiner oder gleich 80° ist.

3. Energieführungskette nach Anspruch 1 oder 2, **dadurch gekennzeichnet, dass** die Lageraufnahme (8) an der Innenseite (3a, 4a) der Seitenlasche (3, 4) vorsteht, wobei sich der Anlagebereich (9) des Querstegs (5, 6) seitlich der Lageraufnahme (8) bis zur Innenseite (3a, 4a) der Seitenlasche (3, 4) erstreckt.

4. Energieführungskette nach einem der Ansprüche 1 bis 3, **da durch gekennzeichnet**, dass die Lageraufnahme (8) an der Innenseite (3a, 4a) der Seitenlasche (3, 4) gegenüber der ihr benachbarten Schmalseite (3c, 3d, 4c, 4d) der Seitenlasche (3, 4) zum Ketteninneren hin versetzt angeordnet ist.

5. Energieführungskette nach einem der Ansprüche 1 bis 4, **dadurch gekennzeichnet, dass** der sich in Längsrichtung des Querstegs (5, 6) zum Lagerbereich (7) erstreckende Bereich der Außenseite des Querstegs (5, 6) einschließlich des Lagerbereichs, (7) in geschlossener Position des Querstegs (5, 6) gegenüber der benachbarten Schmalseite (3c, 3d, 4c, 4d) der Seitenlasche (3, 4) zum Ketteninneren hin versetzt angeordnet ist.

6. Energieführungskette nach einem der Ansprüche 1 bis 5, **da durch gekennzeichnet**, dass der außerhalb des Anlagebereichs (9) liegende sich in Längsrichtung des Querstegs (5, 6) zu dessen Lagerbereich (7) erstreckende Bereich der Außenseite des Querstegs (5, 6) im Wesentlichen flach ausgebildet ist.

7. Energieführungskette nach einem der Ansprüche 1, bis 6, **dadurch gekennzeichnet, dass** der außerhalb des Anlagebereichs (9) liegende, sich in Längsrichtung des Querstegs (5, 6) zu dessen Lagerbereich (7) erstreckende Bereich des Querstegs (5, 6) in Form einer im Wesentlichen flachen Platte ausgebildet ist.

8. Energieführungskette nach einem der Ansprüche 1 bis 7, **dadurch gekennzeichnet, dass** der Anlagebereich (9) zwei an beiden Seiten des Lagerbereichs (7) angeordnete Anlagebereiche mit jeweils einer Anlagefläche umfasst.

9. Energieführungskette nach einem der Ansprüche 1 bis 8, **dadurch gekennzeichnet, dass** der Quersteg (5, 6) an dem genannten Befestigungsende einen Ansatz (12) aufweist, an dem zwei auf einer Achse liegende Lagerzapfen (13) angeordnet sind, die jeweils in eine an der Innenseite (3a, 4a) der Seitenlasche (3, 4) angeordnete taschenförmige Zapfenaufnahme (14) einsetzbar sind, und der vom Ketteninneren nach außen weisenden Rand der Anlagefläche (10) des Anlagebereichs (9) des Querstegs (5, 6) unterhalb bis maximal in Höhe der Achse der Lagerzapfen (13) verläuft.

10. Energieführungskette nach Anspruch 9, **dadurch gekennzeichnet, dass** die Lagerzapfen (13) im Wesentlichen zylindrisch ausgebildet sind mit einem ersten abgeflachten Abschnitt (16) auf der Zylindermantelfläche, der parallel zur Zylinderachse verläuft.

11. Energieführungskette nach Anspruch 9 oder 10, **dadurch gekennzeichnet, dass** die dem Lagerzapfen (13) zugeordnete Zapfenaufnahme (14) der benachbarten Seitenlasche (3, 4) einen zum Lagerzapfen (13) korrespondierenden zylindrischen Raum (17) aufweist, der gegenüber einer Einführöffnung für den Lagerzapfen (13) erweitert ist, so dass der Lagerzapfen (13) in der Zapfenaufnahme (14) einrastbar ist.

12. Energieführungskette nach Anspruch 11, **dadurch gekennzeichnet, dass** die Wand des zylindrischen Raumes (17) einen abgeflachten Abschnitt (18) aufweist, wobei dieser und der erste abgeflachte Abschnitt (16) des Lagerzapfens (13) so zueinander angeordnet sind, dass in der geschlossenen Position des Querstegs (5, 6) der abgeflachte Abschnitt (18) des zylindrischen Raums (17) und der erste abgeflachte Abschnitt (16) des im Wesentlichen zylindrisch ausgebildeten Lagerzapfens (13) sich gegenüberliegen.

13. Energieführungskette nach Anspruch 12, **dadurch gekennzeichnet, dass** der Lagerzapfen (13) einen zweiten abgeflachten Abschnitt (19) aufweist, der parallel zur Zylinderachse des Lagerzapfens (13) verläuft, wobei der zweite abgeflachte Abschnitt (19) am Lagerzapfen (13) so angeordnet ist, dass er in der vollständig geöffneten Position des Querstegs (5, 6) dem abgeflachten Abschnitt (18) des zylindrischen Raumes (17) der Zapfenaufnahme (14) gegenüber liegt.

14. Energieführungskette nach Anspruch 13, **dadurch gekennzeichnet, dass** der erste abgeflachte Abschnitt (16) und der zweite abgeflachte Abschnitt (19) des zylindrisch ausgebildeten Lagerzapfens (13) in einem Winkel größer als 90° zueinander angeordnet sind, der beim Verschwenken des Querstegs (5, 6) zwischen seiner geschlossenen und vollständig geöffneten Position überstrichen wird.

15. Energieführungskette nach einem der Ansprüche 1 bis 14, **dadurch gekennzeichnet, dass** der Anlagebereich (9) mit der Anlagefläche (10) sich über die gesamte Breite des Querstegs (5, 6) außerhalb des Lagerbereichs (7) erstreckt.

## Claims

1. Energy guiding chain for guiding cables, hoses and the like from a first connecting point to a second connecting point that moves relative to the first connecting point, comprising a plurality of plastic chain links (1, 2) that can be pivoted relative to each other over a certain pivoting angle, each of which comprises two side straps (3, 4) displaying inner sides (3a, 4a) facing towards the inside of the chain, outer sides (3b, 4b) facing outwards and narrow faces (3c, 3d, 4c, 4d) running perpendicularly to them and in the longitudinal direction of the side straps (3, 4), where the side straps (3, 4) form opposite strap strands transversely to their longitudinal direction and at least some of the opposite side straps (3, 4) are connected to each other by cross-members (5, 6), at least some of which display a bearing area (7) on at least one of their ends that interacts with a bearing seat (8), located on the side strap (3, 4) facing towards the aforementioned end of the cross-member (5, 6), in articulated fashion for pivoting the cross-member (5, 6) between a closed position and an opened position, and the cross-member (5, 6) displays, on the aforementioned end, seen in the longitudinal direction of the side strap (3, 4) and outside the bearing area (7), a contact area (9), a contact surface (10) of which lies on the inner side (3a, 4a) of the side strap (3, 4) when in the closed position, **characterised in that** the side (11) of the contact area (9) of the cross-member (5, 6) facing from the inside of the chain outwards displays a convex curvature till up to its contact surface (10), or transitions into a linear slope, and encloses an angle of < 90° with the inner side (3a, 4a) of the side strap (3, 4), such that the contact surface (10) moves along the inner side (3a, 4a) of the side strap (3, 4) towards the inside of the chain when the cross-member (5, 6) is pivoted open until the completely opened position is reached.

2. Energy guiding chain according to Claim 1, **characterised in that** the angle between the outer side of the contact area (9) at the point of the contact surface (10) and the inner side (3a, 4a) of the side strap (3, 4) is ≤ 80°.

3. Energy guiding chain according to Claim 1 or 2, **characterised in that** the bearing seat (8) projects on the inner side (3a, 4a) of the side strap (3, 4), where the contact area (9) of the cross-member (5, 6) extends to the side of the bearing seat (8), up to the inner side (3a, 4a) of the side strap (3, 4).

4. Energy guiding chain according to one of Claims 1 to 3, **characterised in that** the bearing seat (8) is, on the inner side (3a, 4a) of the side strap (3, 4), offset towards the inside of the chain in relation to the narrow face (3c, 3d, 4c, 4d) of the side strap (3, 4) adjacent to it.

5. Energy guiding chain according to one of Claims 1 to 4, **characterised in that** the area of the outer side of the cross-member (5, 6) extending towards the bearing area (7) in the longitudinal direction of the cross-member (5, 6), including the bearing area (7), is offset towards the inside of the chain in relation to the adjacent narrow face (3c, 3d, 4c, 4d) of the side strap (3, 4) when the cross-member (5, 6) is in its closed position.

6. Energy guiding chain according to one of Claims 1 to 5, **characterised in that** the area of the outer side of the cross-member (5, 6) that lies outside the contact area (9) and extends in the longitudinal direction of the cross-member (5, 6) towards its bearing area (7), is of essentially flat design.

7. Energy guiding chain according to one of Claims 1 to 6, **characterised in that** the area of the cross-member (5, 6) that lies outside the contact area (9) and extends in the longitudinal direction of the cross-member (5, 6) towards its bearing area (7), is designed in the form of an essentially flat plate.

8. Energy guiding chain according to one of Claims 1 to 7, **characterised in that** the contact area (9) comprises two contact areas located on either side of the bearing area (7), each having one contact surface.

9. Energy guiding chain according to one of Claims 1 to 8, **characterised in that** the aforementioned fastening end of the cross-member (5, 6) displays a shoulder (12), on which two journals (13) lying on one axis are located, each of which can be inserted into a pocket-shaped journal seat (14) located on the inner side (3a, 4a) of the side strap (3, 4), and the edge of the contact surface (10) of the contact area (9) of the cross-member (5, 6) facing outwards from the inside of the chain, lies below, or at most at the level of, the axis of the journals (13).

10. Energy guiding chain according to Claim 9, **characterised in that** the journals (13) are of essentially cylindrical design and have a first flattened section (16) on the lateral surface of the cylinder that lies parallel to the cylinder axis.

11. Energy guiding chain according to Claim 9 or 10, **characterised in that** the journal seat (14) of the adjacent side strap (3, 4) assigned to the journal (13) displays a cylindrical space (17) that corresponds to the journal (13) and is wider in relation to an opening for inserting the journal (13), such that the journal (13) can be snapped into the journal seat (14).

12. Energy guiding chain according to Claim 11, **characterised in that** the wall of the cylindrical space (17) displays a flattened section (18), where it and the first flattened section (16) of the journal (13) are positioned in such a way relative to each other that, in the closed position of the cross-member (5, 6), the flattened section (18) of the cylindrical space (17) and the first flattened section (16) of the essentially cylindrical journal (13) lie opposite each other.

13. Energy guiding chain according to Claim 12, **characterised in that** the journal (13) displays a second flattened section (19), lying parallel to the cylinder axis of the journal (13), where the second flattened section (19) is positioned on the journal (13) in such a way that, in the completely opened position of the cross-member (5, 6), it lies opposite the flattened section (18) of the cylindrical space (17) of the journal seat (14).

14. Energy guiding chain according to Claim 13, **characterised in that** the first flattened section (16) and the second flattened section (19) of the cylindrically designed journal (13) are arranged at an angle > 90° relative to each other, which is swept during pivoting of the cross-member (5, 6) between its closed position and its completely opened position.

15. Energy guiding chain according to one of Claims 1 to 14, **characterised in that** the contact area (9) with the contact surface (10) extends over the entire width of the cross-member (5, 6) outside the bearing area (7).

## Revendications

1. Chaîne de transport d'énergie pour le guidage de flexibles, câbles et similaires d'un premier point de raccordement à un deuxième point de raccordement mobile par rapport au premier point der raccordement, la chaîne de transport étant constituée d'une pluralité de maillons de chaîne (1, 2) en matière plastique qui peuvent pivoter les uns par rapport aux autres selon un certain angle de pivotement et qui respectivement comportent deux pattes latérales (3, 4) présentant des faces intérieures (3a, 4a) orientées vers l'intérieur de la chaîne et des faces extérieures (3b, 4b) orientées vers l'extérieur et des faces étroites (3c, 3d, 4c, 4d) s'étendant perpendiculairement à celles-ci et dans la direction longitudinale des pattes latérales (3, 4), lesdites pattes latérales (3, 4) formant des faisceaux de pattes opposés transversalement à leur direction longitudinale, et au moins certaines pattes latérales (3, 4) opposées étant connectées par des traverses (5, 6) dont au moins certaines présentent une zone de support (7) à au moins une de leurs extrémités, ladite zone de support (7) coopérant de manière articulée avec un logement de support (8) disposé à la patte latérale (3, 4) orientée vers ladite extrémité de la traverse (5, 6), pour pivoter la traverse (5, 6) entre une position fermée et une position ouverte, et la traverse (5, 6) comportant à ladite extrémité et à l'extérieur de la zone de support (7), vu dans la direction longitudinale de la patte latérale (3, 4), une zone de contact (9) qui s'applique, par sa surface de contact (10), sur la face intérieure (3a, 4a) de la patte latérale (3, 4) dans la position fermée, **caractérisée en ce que** le côté (11) de la zone de contact (9) de la traverse (5, 6) orienté de l'intérieur de la chaîne vers l'extérieur est courbé de manière convexe vers et jusqu'à sa surface de contact (10) ou est continu avec une inclinaison linéaire et définit, avec la face intérieure (3a, 4a) de la patte latérale (3, 4), un angle inférieur à 90° pour que la surface de contact (10) se déplace le long de la face intérieure (3a, 4a) de la patte latérale et vers l'intérieur de la chaîne lors du pivotement de la traverse (5, 6) dans la position ouverte et jusqu'à atteindre la position complètement ouverte.

2. Chaîne de transport d'énergie selon la revendication 1, **caractérisée en ce que** l'angle entre la face extérieure de la zone de contact (9) à l'emplacement de la surface de contact (10) et la face intérieure (3a, 4a) de la patte latérale (3, 4) est inférieur ou égal à 80°.

3. Chaîne de transport d'énergie selon les revendications 1 ou 2, **caractérisée en ce que** le logement de support (8) fait saillie sur la face intérieure (3a, 4a) de la patte latérale, la zone de contact (9) de la traverse (5, 6) s'étendant latéralement par rapport au logement de support (8) jusqu'à la face intérieure (3a, 4a) de la patte latérale (3, 4).

4. Chaîne de transport d'énergie selon l'une des revendications 1 à 3, **caractérisée en ce que** le logement de support (8) sur la face intérieure (3a, 4a) de la patte latérale (3, 4) est disposé de manière décalée vers l'intérieur de la chaîne par rapport à la face étroite (3c, 3d, 4c, 4d) adjacente de la patte latérale.

5. Chaîne de transport d'énergie selon l'une des revendications 1 à 4, **caractérisée en ce que** la partie de la face extérieure de la traverse (5, 6) s'étendant dans la direction longitudinale de la traverse (5, 6) vers la zone de support (7), y inclus la zone de support (7), est disposée de manière décalée vers l'intérieur de la chaîne par rapport à la face étroite (3c, 3d, 4c, 4d) adjacente de la patte latérale (3, 4).

6. Chaîne de transport d'énergie selon l'une des revendications 1 à 5, **caractérisée en ce que** la partie de la face extérieure de la traverse (5, 6) se situant à l'extérieur de la zone de contact (9) et s'étendant dans la direction longitudinale de la traverse (5, 6) vers la zone de support (7) de cette dernière est sensiblement plate.

7. Chaîne de transport d'énergie selon l'une des revendications 1 à 6, **caractérisée en ce que** la partie de la face extérieure de la traverse (5, 6) se situant à l'extérieur de la zone de contact (9) et s'étendant dans la direction longitudinale de la traverse (5, 6) vers la zone de support (7) de cette dernière est sous la forme d'une plaque sensiblement plate.

8. Chaîne de transport d'énergie selon l'une des revendications 1 à 7, **caractérisée en ce que** la zone de contact (9) comporte deux zones de contact qui sont disposées sur les deux côtés de la zone de support (7) et respectivement présentent une surface de contact.

9. Chaîne de transport d'énergie selon l'une des revendications 1 à 8, **caractérisée en ce que** la traverse (5, 6) comporte, sur ladite extrémité de fixation, un appendice (12) auquel sont disposés deux tourillons (13) qui peuvent être respectivement insérés dans un logement de tourillon (14) en forme de poche disposé à la face intérieure (3a, 4a) de la patte latérale (3, 4), et que le bord de la surface de contact (10) de la zone de contact (9) de la traverse (5, 6) orienté de l'intérieur vers l'extérieur de la chaîne, s'étend au-dessous de l'axe des tourillons (13) et au maximum au niveau de cet axe.

10. Chaîne de transport d'énergie selon l'une des revendications 1 à 8, **caractérisée en ce que** les tourillons (13) sont essentiellement cylindriques et comportent, sur la surface d'enveloppe du cylindre, une première partie aplatie (16) s'étendant parallèlement par rapport à l'axe de cylindre.

11. Chaîne de transport d'énergie selon les revendications 9 ou 10, **caractérisée en ce que** le logement de tourillon (14) de la patte latérale (3, 4) adjacente, associé au tourillon (13), comporte un espace cylindrique (17) qui correspond au tourillon (13) et est élargi par rapport à l'orifice d'introduction pour le tourillon (13) pour que le tourillon (13) puisse s'encliqueter dans le logement de tourillon (14).

12. Chaîne de transport d'énergie selon la revendication 11, **caractérisée en ce que** la paroi de l'espace cylindrique (17) présente une partie aplatie (18), cette partie aplatie (18) ainsi que la première partie aplatie (16) du tourillon (13) étant disposées l'une par rapport à l'autre de telle manière que, dans la position fermée de la traverse (5, 6), cette partie aplatie (18) de l'espace cylindrique (17) et la première partie aplatie (16) du tourillon (13) en forme essentiellement cylindrique étant opposées l'une à l'autre.

13. Chaîne de transport d'énergie selon la revendication 12, **caractérisée en ce que** le tourillon (13) présente une deuxième partie aplatie (19) qui s'étend parallèlement par rapport à l'axe de cylindre du tourillon (13), la deuxième partie aplatie (19) étant disposée sur ledit tourillon (13) de telle manière que celle-ci, dans la position complètement ouverte de la traverse (5, 6), soit opposée à la partie aplatie (18) de l'espace cylindrique (17) du logement de tourillon (14).

14. Chaîne de transport d'énergie selon la revendication 12, **caractérisée en ce que** la première partie aplatie (16) et la deuxième partie aplatie (19) du tourillon cylindrique (13) sont disposées l'une par rapport à l'autre selon un angle supérieur à 90° parcouru lors du pivotement de la traverse (5, 6) entre sa position fermée et sa position complètement ouverte.

15. Chaîne de transport d'énergie selon l'une des revendications 1 à 14, **caractérisée en ce que** la zone de contact (9) avec la surface de contact (10) s'étend sur toute la largeur de la traverse (5, 6) à l'extérieur de la zone de support (7).
